# EUROPEAN PATENT SPECIFICATION

(11) **EP 2 332 635 B1**
(45) Date of publication and mention of the grant of the patent: **17.02.2021**
(21) Application number: 09815857.9
(22) Date of filing: 17.09.2009
(51) Int. Cl.: B01D 63/08, B01D 63/00, C02F 1/44, C02F 3/12, B01D 61/18, B01D 69/10, C02F 1/00

(54) **MEMBRANE CARTRIDGE**
MEMBRANPATRONE
CARTOUCHE MEMBRANAIRE

(30) Priority: 26.09.2008 JP 2008247113
(43) Date of publication of application: 15.06.2011
(73) Proprietor: Kubota Corporation, Osaka-shi, Osaka 556-8601 (JP)
(72) Inventor: Kimihiro ISHIKAWA, Hyogo 661-8567 (JP); Kazuhiro YAMAZAKI, Hyogo 661-8567 (JP); Tomohiko SASAKI, Hyogo 661-8567 (JP); Yoshio MATSUZAKI, Hyogo 661-8567 (JP)
(74) Representative: le Vrang, Klaus
(86) International application number: PCT/JP2009/004664
(87) International publication number: WO 2010/035435

(56) References cited:
- JP-A- 6 039 250
- JP-A- 6 178 920
- JP-A- 8 281 264
- JP-A- 9 299 969
- JP-A- S62 204 802
- JP-A- 2003 117 358
- JP-A- 2004 121 905
- JP-A- 2007 268 388
- JP-A- 2008 073 680

## Description

The present invention relates to a membrane cartridge constituting a submerged membrane separator used for, e.g., solid-liquid separation of activated sludge or the like.

In the related art, e.g., in a membrane bioreactor system, a submerged membrane separator is submerged in a reaction tank where activated sludge treatment is performed on sewage or the like. In such a membrane separator, multiple membrane cartridges of an organic flat-membrane type are arranged in parallel at predetermined intervals in the main-unit casing.

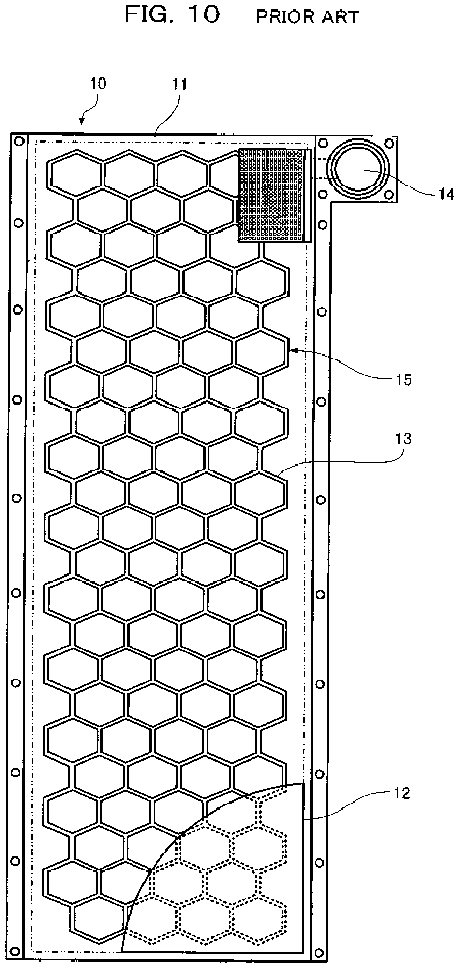

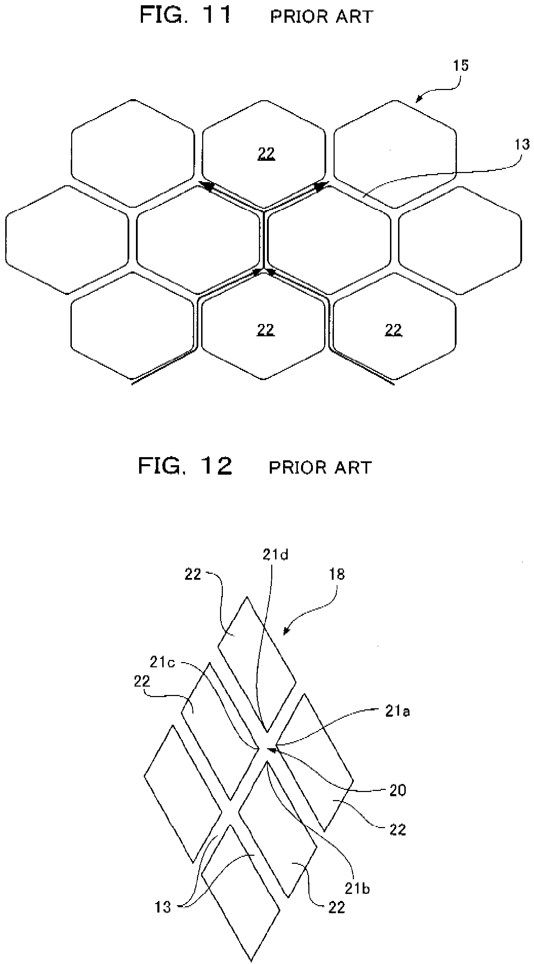

As shown in FIGS. 10 and 11, a membrane cartridge 10 includes a filtration plate 11 and filtration membranes 12 provided on both sides of the filtration plate 11. Further, channel grooves 13 are formed on both sides of the filtration plate 11. A permeated liquid passes through the filtration membranes 12 and then flows through the channel grooves 13. Moreover, at a point on the upper end of one side of the filtration plate 11, a permeated liquid outlet 14 is provided for collecting the permeated liquid in the channel grooves 13 and taking out the permeated liquid from the membrane cartridge 10. The channel groove 13 has a honeycomb-shaped channel groove pattern 15.

With this configuration, by applying a suction pressure to the inside of the membrane cartridge 10 through a suction pump, a liquid mixture in the tank (liquid to be treated) is filtered through the filtration membranes 12 by using a transmembrane pressure difference between the front and rear sides of the filtration membrane 12 as a driving pressure, the permeated liquid having passed through the filtration membranes 12 flows through the permeated liquid outlet 14 via the channel grooves 13, and the liquid is discharged from the permeated liquid outlet 14 through a header.

For example, the published unexamined patent application JP 2007-268388 describes the membrane cartridge 10 having the honeycomb-shaped channel groove pattern 15.

Instead of the honeycomb-shaped channel groove pattern 15, as shown in FIG. 12, an X-shaped channel groove pattern 18 may be provided in a membrane cartridge. The channel groove pattern 18 is formed by channel grooves 13 that intersect with each other in an X pattern.

In the membrane cartridge 10 having the honeycomb-shaped channel groove pattern 15 of FIGS. 10 and 11, however, the channel groove 13 is not formed like a continuous straight line to the permeated liquid outlet 14 of the filtration plate 11. Thus, a permeated liquid flows to the permeated liquid outlet 14 while repeatedly joining and branching, so that a pressure loss disadvantageously increases and the overall surface of the filtration membrane 12 is hard to effectively use at the same time.

In a membrane cartridge 19 having the X-shaped channel groove pattern 18 of FIG. 12, the filtration membrane 12 is supported only by corners 21 a to 21 d of four cells 22 (four-point support) at an intersection 20 where the channel grooves 13 intersect with each other, the cells 22 being separated by the channel grooves 13. Thus, when a suction pressure is applied to the membrane cartridge 19, it is difficult to sufficiently support the filtration membrane 12 at the intersection 20, so that the filtration membrane 12 may come into the channel grooves 13 at the intersection 20 and the channel cross-sectional area of the channel groove 13 may decrease. Therefore, a pressure loss may disadvantageously increase at the intersection 20.

In the membrane cartridge 10 of FIGS. 10 to 12, the permeated liquid outlet 14 is provided only at one point on the upper end of the filtration plate 11. Thus, when the membrane cartridge 10 is long in the vertical direction, it is difficult to apply a sufficient suction pressure to the lower part of the membrane cartridge 10 away from the permeated liquid outlet 14. Therefore disadvantageously, a permeated liquid may not be sufficiently obtained from the lower part of the membrane cartridge 10

JP2007 268388 A, JP 2003 117358 A, JP 2008 073680 A , JP 2004 121905 A, JP 9 299969 A, JP 6 178920 A, JP 6 039250 A, JP 8 281264 A and JP S62 204802 A disclose cartridges for submerged membrane separators.

JP S62 204802 A shows and describes a plate type module, wherein a membrane is held on a support of the membrane having a discharge means for a permeated fluid. Fine grooves are provided on the support of the membrane in definite intervals rectangular to the flow direction of a liquid to be permeated. The liquid permeated through the membrane is allowed to flow through the fine grooves combined with a discharge means of the permeated liquid and to flow out through an outlet for the permeated fluid. The fine grooves are provided in water collection sections and build groove patterns.

An object of the present invention is to provide a membrane cartridge that can effectively use a membrane surface with a reduced pressure loss and obtain a larger amount of permeated liquid.

In order to attain the object, the invention is a membrane cartridge constituting a submerged membrane separator, the membrane cartridge including:
a filtration membrane provided at least on one surface of a filtration plate;
channel groove patterns formed on the surface of the filtration plate covered with the filtration membrane, the channel groove patterns allowing the passage of a permeated liquid having passed through the filtration membrane; and
permeated liquid outlets provided on the circumferential edge of the filtration plate, the permeated liquid outlets collecting and taking out the permeated liquid having passed through the channel groove patterns,
wherein the filtration plate is divided into multiple water collection sections,
the channel groove patterns are formed in the respective water collection sections,
the channel groove patterns include a first channel groove pattern and a second channel groove pattern,
wherein the first channel groove patterns is formed in one of the collection sections and the second channel groove pattern is formed in another one of the central water collection sections,
a length direction of the through channel grooves in the first channel groove pattern and a length direction of the through-channel grooves in the second channel groove pattern are different from each other,
a header groove is provided at a boundary portion of the water collection sections,
the header groove has a larger channel cross-sectional area than the through-channel grooves,
the through-channel grooves in one of the water collection sections and the through-channel grooves in another one of the water collection sections adjacent to the one of the water collection sections communicate with the header groove through the boundary portion,
the respective through-channel grooves gradually approach one of the permeated liquid outlets nearest to the water collection section to which the respective through-channel grooves belong from one end to the other end,
whereby the header groove communicates directly with a hole of one of the permeated liquid outlets and
the channel groove patterns including linear through-channel grooves across the water collection sections.

In this configuration, when a suction pressure is applied to the inside of the membrane cartridge, a liquid to be treated is filtered through the filtration membrane. At this point, the permeated liquid having passed through the filtration membrane flows to the permeated liquid outlets through the through-channel grooves of the channel groove patterns, and then the permeated liquid is collected out of the membrane cartridge from the permeated liquid outlets.

The through-channel grooves of the channel groove patterns are linearly provided from one end to the other end so as to gradually approach the nearest permeated liquid outlet. Thus, the permeated liquid smoothly flows in the through-channel grooves and the distance of the permeated liquid flow in the through-channel grooves to the permeated liquid outlet is shortened. With this configuration, it is possible to reduce a pressure loss and effectively use the membrane surface of the membrane cartridge.

Since the channel cross-sectional area of the header groove is larger than that of the through-channel groove, the flow velocity of the permeated liquid flowing in the header groove is lower than the flow velocity of the permeated liquid flowing in the through-channel grooves. Thus, pressures in the header grooves are substantially averaged (equalized) and suction pressures (pressure distribution) can be averaged (equalized) in the width direction of the membrane cartridge.

According to an embodiment of the invention, the through-channel grooves in the water collection section are arranged in parallel.

According to an embodiment of the invention, the through-channel grooves in the water collection section are radially arranged with respect to a point close to the nearest permeated liquid outlet.

According to an embodiment of the invention, the adjacent through-channel grooves communicate with each other through communication grooves.

With this configuration, the permeated liquid having passed through the filtration membrane flows to the permeated liquid outlets through the through-channel grooves and the communication grooves, and the permeated liquid is collected out of the membrane cartridge from the permeated liquid outlets.

According to an embodiment of the invention, the communication groove and the through-channel groove cross each other like a letter T.

With this configuration, the filtration membrane is supported by the two corners of cells, which are surrounded by the communication grooves and the through-channel grooves, and one side edge of the through-channel groove (i.e., supported by two points and one linear portion) at an intersection where the through-channel groove and the communication groove intersect each other. Therefore, when a suction pressure is applied to the inside of the membrane cartridge, the filtration membrane can be more sufficiently supported at the intersection than in the related art in which the filtration membrane is supported only by the four corners of the cells (i.e., supported by four points). It is thus possible to prevent the filtration membrane at the intersection from coming into the through-channel groove and reducing the channel cross-sectional area of the through-channel groove. Consequently, it is possible to reduce a pressure loss and effectively use the membrane surface of the membrane cartridge.

According to an embodiment of the invention, the filtration plate has a shape whose length and width are different,
the permeated liquid outlets are disposed at different heights when the filtration plate is installed upright such that the longitudinal direction of the filtration plate is parallel to the vertical direction,
the filtration plate is divided into the water collection sections in the vertical direction.

With this configuration, the permeated liquid having passed through the filtration membrane flows through the through-channel grooves of the channel groove patterns in the water collection sections, and then the permeated liquid is collected out of the membrane cartridge from the permeated liquid outlets closest to the respective water collection sections. Thus, it is possible to reduce a pressure loss to sufficiently apply a suction pressure over the membrane surface of the membrane cartridge, thereby collecting the permeated liquid while effectively using the membrane surface.

According to an embodiment of the invention, the permeated liquid outlets are provided respectively at positions of the boundary portions of the water collection sections.

With this configuration, the permeated liquid flows through the through-channel grooves of the channel groove pattern in one of the water collection sections adjacent to each other across the boundary portion and flows through the through-channel grooves of the channel groove pattern in the other water collection section. After that, the permeated liquid is collected out of the membrane cartridge from the permeated liquid outlet corresponding to the boundary portion of the water collection sections.

According to an embodiment of the invention, the permeated liquid outlets are provided only on one side edge of the filtration plate or on both side edges of the filtration plate.

As has been discussed, the present invention can reduce a pressure loss of a membrane cartridge, sufficiently apply a suction pressure over the membrane surface, effectively use the membrane surface, and collect a larger amount of permeated liquid from the membrane cartridge.

### Brief Description of the Drawings

[FIG. 1] FIG. 1 is a side sectional view showing a membrane separator including membrane cartridges according to a first embodiment of the present invention.
[FIG. 2] FIG. 2 is a front sectional view of the membrane separator including the membrane cartridges.
[FIG. 3] FIG. 3 is a front view of the membrane cartridge.
[FIG. 4] FIG. 4 is a front view showing a filtration plate of the membrane cartridge.
[FIG. 5A] FIG. 5A is an enlarged front view showing a portion of a permeated liquid outlet nozzle in the upper part of the filtration plate of the membrane cartridge.
[FIG. 5B] FIG- 5B is an enlarged front view showing a portion of a permeated liquid outlet nozzle in the lower part of the filtration plate of the membrane cartridge.
[FIG. 6] FIG. 6 is an enlarged view showing an intersection of a through-channel groove and a communication groove of the filtration plate of the membrane cartridge.
[FIG. 7A] FIG. 7A is a front view showing a filtration plate of a membrane cartridge according to a second embodiment of the present invention.
[FIG. 7B] FIG. 7B is a front view showing a filtration plate of a membrane cartridge according to a third embodiment of the present invention.
[FIG. 7C] FIG. 7C is a front view showing a filtration plate of a membrane cartridge according to a fourth embodiment of the present invention.
[FIG. 7D] FIG. 7D is a front view showing a filtration plate of a membrane cartridge according to a fifth embodiment of the present invention.
[FIG. 8] FIG. 8 is a front view showing a filtration plate of a membrane cartridge according to a sixth embodiment of the present invention.
[FIG. 9A] FIG. 9A shows a channel groove pattern of a membrane cartridge according to a seventh embodiment of the present invention.
[FIG. 9B] FIG. 9B shows a channel groove pattern of a membrane cartridge according to an eighth embodiment of the present invention.
[FIG. 10] FIG. 10 is a front view showing a filtration plate of a membrane cartridge according to the related art.
[FIG. 11] FIG. 11 is an enlarged view showing channel grooves on the filtration plate of the membrane cartridge.
[FIG. 12] FIG. 12 is an enlarged view showing channel grooves on a filtration plate of another membrane cartridge.

### Description of the Embodiments

Referring to FIGS, 1 to 6, a first embodiment of the present invention will be described below.

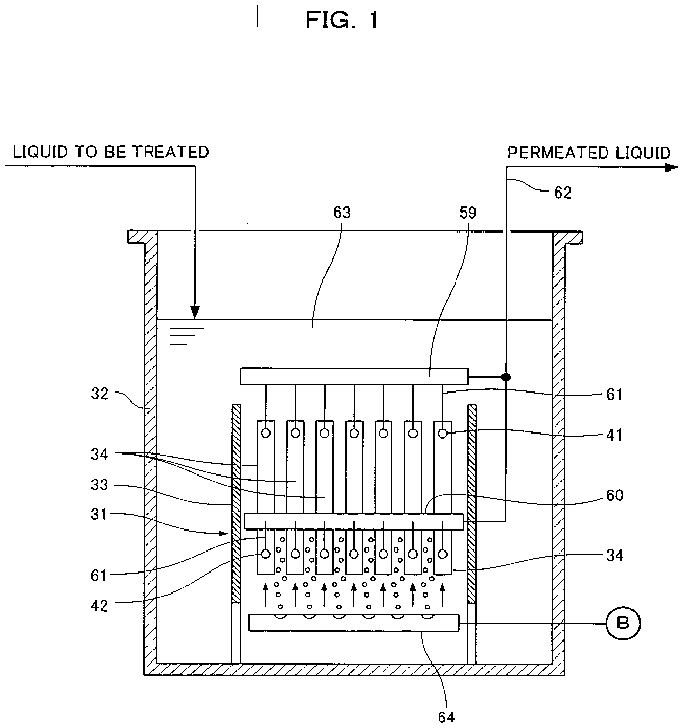

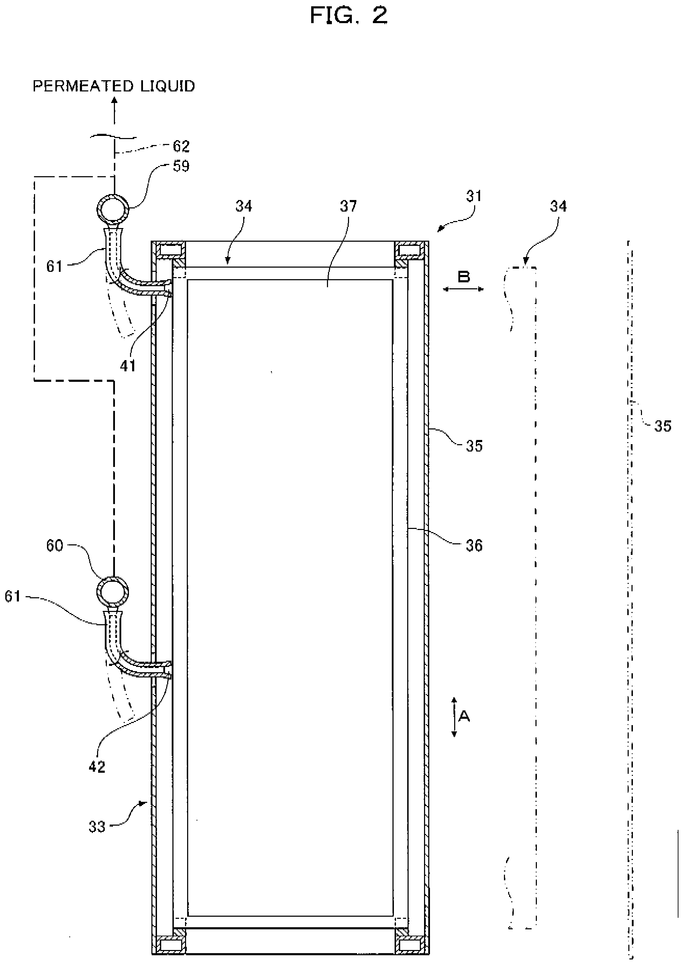

As shown in FIGS. 1 and 2, a submerged membrane separator 31 is provided in a reaction tank 32 in which activated sludge treatment is performed on sewage or the like. The membrane separator 31 includes: a square main-unit casing 33 whose upper and lower ends are opened; multiple membrane cartridges 34 of an organic flat-membrane type which are arranged in parallel at predetermined intervals in the main-unit casing 33; and an air diffuser 64 provided below the membrane cartridges 34.

The adjacent membrane cartridges 34 having opposed membrane surfaces are arranged in parallel at the predetermined intervals. Although the membrane cartridges 34 are spaced at the predetermined intervals, the membrane cartridges 34 may be contacted with each other at least on the side edges of the membrane cartridges 34 In this case, a side of the main-unit casing 33 may be opened or the main-unit casing 33 may be eliminated.

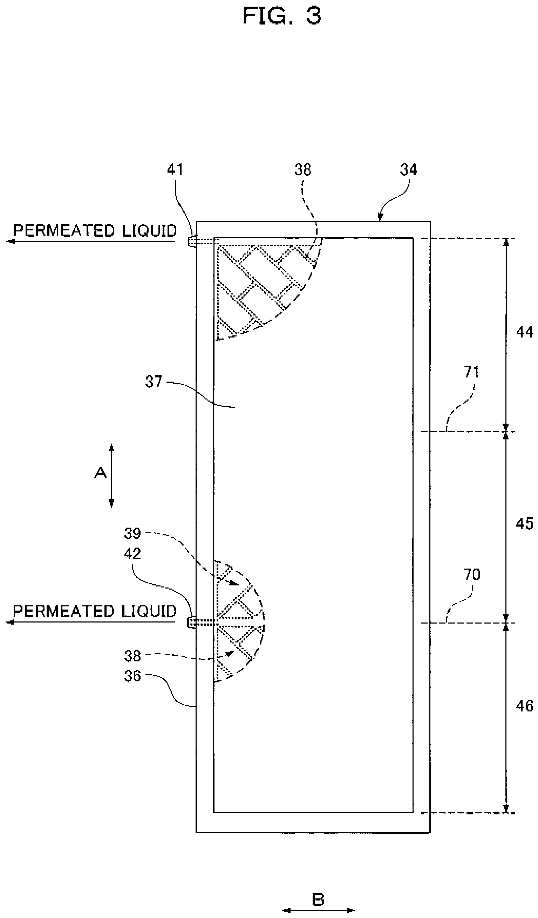

As shown in FIG. 3, the membrane cartridge 34 includes: a filtration plate 36 shaped like a rectangle extended in vertical direction A (an example of a shape whose length and width are different), and filtration membranes 37 attached to both sides of the filtration plate 36. The circumferential edge of the filtration membrane 37 is fixed to the filtration plate 36 by, e.g., welding or bonding.

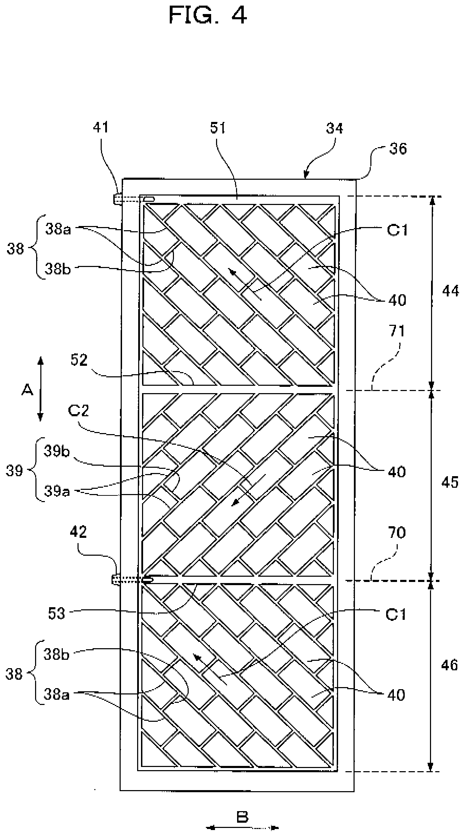

As shown in FIG. 4, multiple channel groove patterns 38 and 39 (two patterns in FIG. 4) are formed on both sides of the filtration plate 36. A permeated liquid having passed through the filtration membrane 37 flows through the channel groove patterns 38 and 39. The channel groove patterns 38 and 39 are covered with the filtration membrane 37.

On one side of the filtration plate 36 in width direction B, upper and lower permeated liquid outlet nozzles 41 and 42 (two upper and lower nozzles in FIG. 4) are provided. The permeated liquid outlet nozzles 41 and 42 (an example of a permeated liquid outlet) collect a permeated liquid in the first and second channel groove patterns 38 and 39 and discharge the permeated liquid out of the membrane cartridge 34. The height of the upper permeated liquid outlet nozzle 41 from the lower end of the filtration plate 36 is set larger than the height of the lower permeated liquid outlet nozzle 42 from the lower end of the filtration plate 36.

As shown in FIGS. 3 and 4, the filtration plate 36 is divided into water collection sections 44 to 45 in the vertical direction (three in the vertical direction in FIGS. 3 and 4). The upper permeated liquid outlet nozzle 41 is located on the upper end of the upper water collection section 44. The lower permeated liquid outlet nozzle 42 is located at a position corresponding to a boundary portion 70 between the central water collection section 45 and the lower water collection section 46.

The first channel groove patterns 38 are formed in the upper water collection section 44 and the lower water collection section 46. The second channel groove pattern 39 is formed in the central water collection section 45.

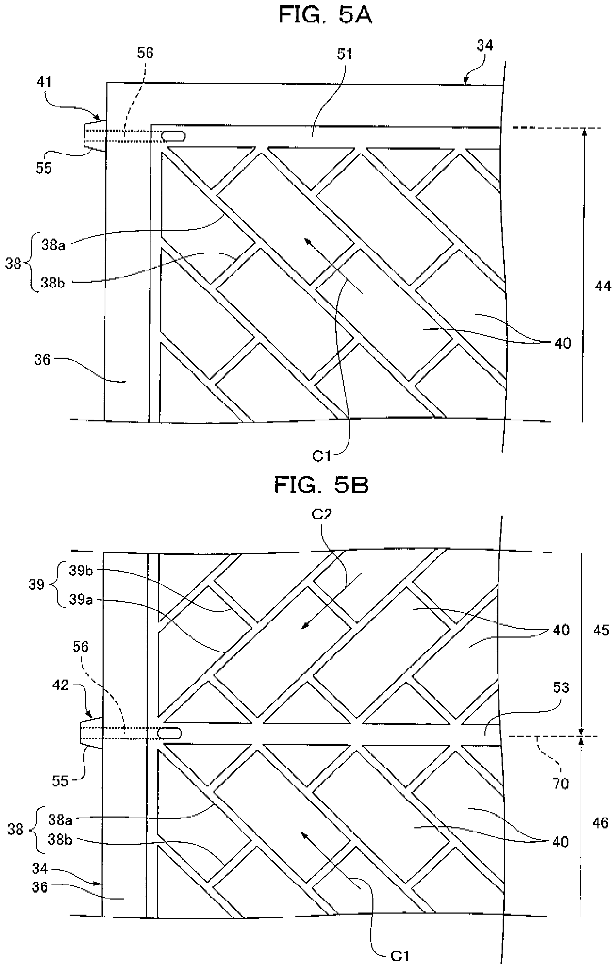

As shown in FIGS. 4 and 5, the first channel groove pattern 38 is formed by multiple linear through-channel grooves 38a extending across the water collection sections 44 and 46 and multiple communication grooves 38b communicating with the adjacent through-channel grooves 38a. Similarly, the second channel groove pattern 39 is formed by multiple linear through-channel grooves 39a extending across the water collection section 45 and multiple communication grooves 39b communicating with the adjacent through-channel grooves 39a. The through-channel grooves 38a of the first channel groove pattern 38 are arranged in parallel at predetermined intervals and the through-channel grooves 39a of the second channel groove pattern 39 are similarly arranged in parallel at predetermined intervals- By forming the first and second channel groove patterns 38 and 39, multiple rectangular cells 40 surrounded by the through-channel grooves 38a and 39a and the communication grooves 38b and 39b are formed on both sides of the filtration plate 36.

Length direction C1 of the through-channel grooves 38a of the first channel groove pattern 38 and length direction C2 of the through-channel grooves 39a of the second channel groove pattern 39 are different from each other.

The through-channel grooves 38a of the first channel groove pattern 38 in the upper water collection section 44 are inclined from the lower end (an example of one end) to the upper end (an example of the other end) in the length direction C1 with respect to the vertical direction such that the through-channel grooves 38a gradually approach the upper permeated liquid outlet nozzle 41 (an example of the nearest permeated liquid outlet).

The through-channel grooves 39a of the second channel groove pattern 39 in the central water collection section 45 are inclined from the upper end (an example of one end) to the lower end (an example of the other end) in the length direction C2 with respect to the vertical direction such that the through-channel grooves 39a gradually approach the lower permeated liquid outlet nozzle 42 (an example of the nearest permeated liquid outlet).

The through-channel grooves 38a of the first channel groove pattern 38 in the lower water collection section 46 are inclined from the lower end (an example of one end) to the upper end (an example of the other end) in the length direction C1 with respect to the vertical direction such that the through-channel grooves 38a gradually approach the lower permeated liquid outlet nozzle 42 (an example of the nearest permeated liquid outlet).

The through-channel groove 38a and the communication groove 38b of the first channel groove pattern 38 cross each other like a letter T, and the through-channel groove 39a, and the communication groove 39b of the second channel groove pattern 39 cross each other like a letter T.

On both sides of the filtration plate 36, multiple header grooves 51 to 53 extended in the width direction B of the filtration plate 36 are formed (three header grooves are vertically provided in FIG. 4). The first header groove 51 is located at the upper end of the upper water collection section 44, the second header groove 52 is located at a boundary portion 71 between the upper water collection section 44 and the central water collection section 45, and the third header groove 53 is located at the boundary portion 70 between the central water collection section 45 and the lower water collection section 46.

The upper ends of the through-channel grooves 38a in the upper water collection section 44 communicate with the first header groove 51. The lower ends of the through-channel grooves 38a in the upper water collection section 44 (in one of the water collection sections) and the upper ends of the through-channel grooves 39a in the central water collection section 45 (in the other water collection section) communicate with the second header groove 52- The lower ends of the through-channel grooves 39a in the central water collection section 45 (in one of the water collection sections) and the upper ends of the through-channel grooves 38a in the lower water collection section 46 (in the other water collection section) communicate with the third header groove 53. The channel cross-sectional areas of the header grooves 51 to 53 are larger than those of the through-channel grooves 38a and 39a.

As shown in FIG. 5, the upper and lower permeated liquid outlet nozzles 41 and 42 each include a nozzle body 55 protruding outward from the edge of the filtration plate 36, and a hole 56 provided on the nozzle body 55. One end of the hole 56 is opened on the end of the nozzle body 55 and the other end of the hole 56 communicates with the first and third header grooves 51 and 53.

As shown in FIGS. 1 and 2, on one of the right and left sides of the main-unit casing 33, upper and lower water collecting pipes 59 and. 60 are provided from the front to the rear of the main-unit casing 33 (two water collecting pipes are vertically provided in FIG. 2). The water collecting pipes 59 and 60 collect a permeated liquid sucked from the permeated liquid outlet nozzles 41 and 42 of the membrane cartridges 34. The permeated liquid outlet nozzles 41 and 42 and the water collecting pipes 59 and 60 are connected to each other via connecting pipes 61.

To the water collecting pipes 59 and 60, a delivery pipe 62 for delivering the permeated liquid is connected. On the delivery pipe 62, a suction pump is provided that generates a suction force in the membrane cartridge 34 to suck the permeated liquid. Without using a suction pump, a suction force may be generated by using the hydraulic head pressure of a liquid to be treated 63 in the reaction tank 32 as a filtering pressure.

As shown in FIG. 2, a detachable side panel 35 is provided on the other side of the main-unit casing 33. As indicated by the virtual line of FIG. 2, by detaching the side panel 35 from the main-unit casing 33, the membrane cartridge 34 can be taken in and out from the main-unit casing 33 in the width direction B (lateral direction).

The effect of the configuration will be described below.

In a filtering operation, the suction pump is driven to reduce a pressure in the membrane cartridges 34 while air is diffused from the air diffuser 64, so that sludge or the like in the liquid to be treated 63 is captured by the filtration membranes 37. At this point, a permeated liquid having passed through the filtration membrane 37 flows through the through-channel grooves 38a and 39a and the communication grooves 38b and 39b of the channel groove patterns 38 and 39 to the permeated liquid outlet nozzles 41 and 42. The permeated liquid is collected to the water collecting pipes 59 and 60 from the permeated liquid outlet nozzles 41 and 42 through the connecting pipes 61, and is delivered to the outside of the reaction layer 32 through the delivery pipe 62.

At this point, as shown in FIGS. 4 and 5, the permeated liquid in the upper water collection section 44 passes through the through-channel grooves 38a and the communication grooves 38b of the first channel groove pattern 38 and the first header groove 51, and flows into the upper permeated liquid outlet nozzle 41. The through-channel grooves 38a are linearly provided from the lower end to the upper end in the length direction Cl and gradually approach the upper permeated liquid outlet nozzle 41, Thus the permeated liquid smoothly flows in the through-channel grooves 38a and the distance of the flow to the upper permeated liquid outlet nozzle 41 is shortened,

Further, the permeated liquid in the central water collection section 45 passes through the through-channel grooves 39a and the communication grooves 39b of the second channel groove pattern 39 and the third header groove 53 and flows into the lower permeated liquid outlet nozzle 42. The through-channel grooves 39a are linearly provided from the upper end to the lower end in the length direction C2 and gradually approach the lower permeated liquid outlet nozzle 42. Thus the permeated liquid smoothly flows in the through-channel grooves 39a and the distance of the flow to the lower permeated liquid outlet nozzle 42 is shortened.

Moreover, the permeated liquid in the lower water collection section 46 passes through the through-channel grooves 38a and the communication grooves 38b of the first channel groove pattern 38 and the third header groove 53 and flows into the lower permeated liquid outlet nozzle 42. As in the upper and central water collection sections 44 and 45, the permeated liquid smoothly flows in the through-channel grooves 38a and the distance of the flow to the lower permeated liquid outlet nozzle 42 is shortened.

with this configuration, it is possible to reduce a pressure loss of the membrane cartridge 34 and effectively use the membrane surface.

As has been discussed, the permeated liquid in the upper water collection section 44 is taken out of the membrane cartridge 34 from the upper permeated liquid outlet nozzle 41 closest to the upper water collection section 44, and the permeated liquid in the central and lower water collection sections 45 and 46 is taken out of the membrane cartridge 34 from the lower permeated liquid outlet nozzle 42 closest to the water collection sections 45 and 46. Thus it is possible to apply a sufficient suction pressure to the lower part of the rectangular membrane cartridge 34 extended in the vertical direction A, so that the permeated liquid can be obtained while effectively using the overall membrane surface and a larger amount of permeated liquid can be collected from the membrane cartridge 34.

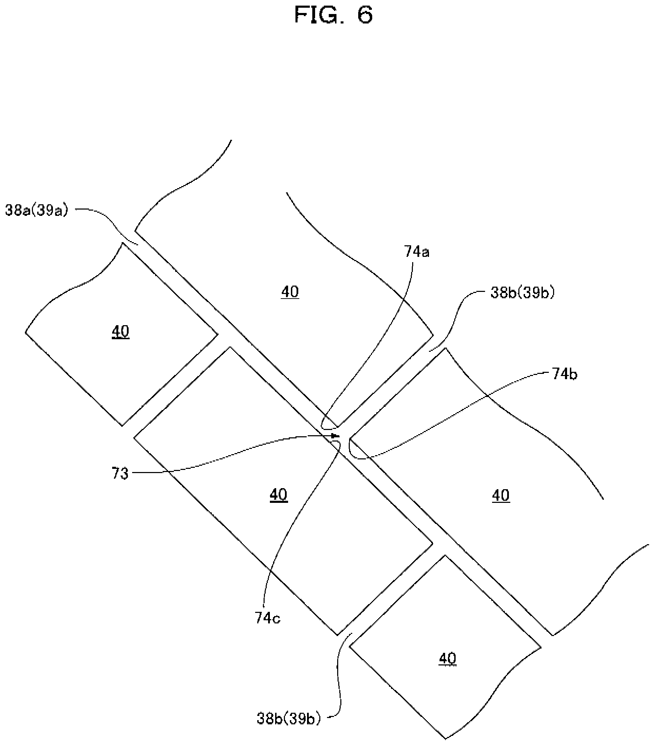

As shown in FIG. 6, in the upper and lower water collection sections 44 and 46, the filtration membrane 37 is supported by corners 74a and 74b of the two adjacent cells 40 and one side edge 74c of the through-channel groove 38a (i.e., supported by two points and one linear portion) at an intersection 73 where the through-channel groove 38a and the communication groove 38b of the first channel groove pattern 38 intersect each other. Therefore, when a suction pressure is applied to the inside of the membrane cartridge 34, the filtration membrane 37 can be more sufficiently supported at the intersection 73 than in the related art of FIG. 12 in which the filtration membrane is supported only by the corners 21a to 21d of the four cells 22 (i.e., supported by four points). It is thus possible to prevent the filtration membrane 37 at the intersection 73 from coming into the through-channel groove 38a and reducing the channel cross-sectional area of the through-channel groove 38a. Similarly, at the intersection 73 where the through-channel groove 39a and the communication groove 39b of the second channel groove pattern 39 in the central water collection section 45 intersect with each other, it is possible to prevent the filtration membrane 37 from coming into the through-channel groove 39a and reducing the channel cross-sectional area of the through-channel groove 39a. Therefore, it is possible to reduce a pressure loss of the membrane cartridge 34 and effectively use the membrane surface.

As shown in FIG. 4, the channel cross-sectional areas of the header grooves 51 to 53 are larger than those of the through-channel grooves 38a and 39a, so that the flow velocity of a permeated liquid flowing in the header grooves 51 to 53 is lower than the flow velocity of a permeated liquid flowing in the through-channel grooves 38a and 39a. Thus pressures in the header grooves 51 to 53 are substantially averaged (equalized) and suction pressures (pressure distribution) can be averaged (equalized) in the width direction B of the membrane cartridge 34,

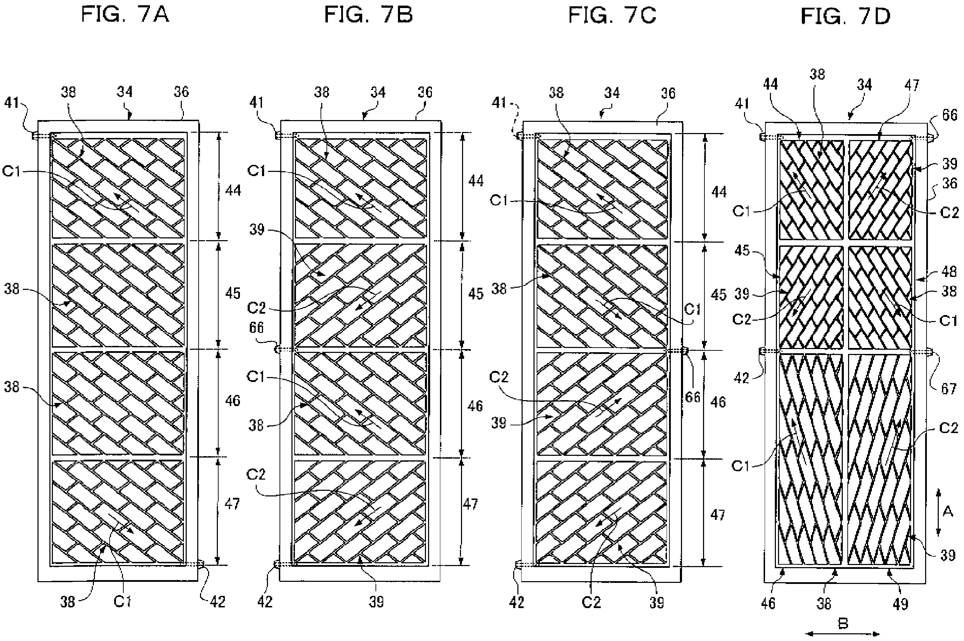

In the first embodiment, as shown in FIG. 4, the two permeated liquid outlet nozzles 41 and 42 are provided only on one side edge of the filtration plate 36 of the membrane cartridge 34. As shown in FIGS. 7A to 7D, two or at least three permeated liquid outlet nozzles 41, 42, 66, and 67 (permeated liquid outlets) may be provided as second to fifth embodiments. The permeated liquid outlet nozzles 41, 42, 66, and 67 may be provided on both side edges of the filtration plate 36 or only on the other side edge of the filtration plate 36.

In the first embodiment, as shown in FIG. 4, the filtration plate 36 is divided into the three water collection sections 44 to 46 in the vertical direction A. The filtration plate 36 may be divided into two water collection sections in the vertical direction A. As shown in FIGS. 7A to 7C, the filtration plate 36 may be divided into at least four water collection sections 44 to 47 in the vertical direction A. Further, as shown in FIG. 7D, the filtration plate 36 may be divided into multiple water collection sections 44 to 49 in the vertical direction A (e.g., three water collection sections) and in the width direction B (e.g., two water collection sections).

In the first embodiment, the two channel groove patterns 38 and 39 are formed on the filtration plate 36. Three or more channel groove patterns may be formed.

In the first embodiment, as shown in FIG. 4, the through-channel grooves 38a of the first channel groove pattern 38 are arranged in parallel and the through-channel grooves 39a of the second channel groove pattern 39 are arranged in parallel. The through-channel grooves are not always arranged in parallel. For example, in a sixth embodiment of FIG- 8, through-channel grooves 38a of a first channel groove pattern 38 formed in an upper water collection section 44 are radially arranged with respect to a point closest (adjacent) to an upper permeated liquid outlet nozzle 41, through-channel grooves 39a of a second channel groove pattern 39 formed in a central water collection section 45 are radially arranged with respect to a point closest (adjacent) to a, lower permeated liquid outlet nozzle 42, and the through-channel grooves 38a of the first channel groove pattern 38 formed in a lower water collection section 46 are radially arranged with respect to a point closest (adjacent) to the lower permeated liquid outlet nozzle 42.

The through-channel grooves 38a of the first channel groove pattern 38 and the through-channel grooves 39a of the second channel groove pattern 39 are inclined with respect to the vertical direction but in different directions.

The effect of the configuration will be described below.

In the upper water collection section 44, a permeated liquid flows to the upper permeated liquid outlet nozzle 41 through the through-channel grooves 38a and communication grooves 38b of the first channel groove pattern 38 and a first header groove 51. In the central water collection section 45, the permeated liquid flows to the lower permeated liquid outlet nozzle 42 through the through-channel grooves 39a and communication grooves 39b of the second channel groove pattern 39 and a third header groove 53. In the lower water collection section 46, the permeated liquid flows to the lower permeated liquid outlet nozzle 42 through the through-channel grooves 38a and the communication grooves 38b of the first channel groove pattern 38 and the third header groove 53. This configuration can obtain the same effect as in the first embodiment.

The through-channel grooves 38a and 39a of the membrane cartridge 34 illustrated in the second to fifth embodiments may be radially arranged instead of the parallel arrangement.

In the foregoing embodiments, the filtration membranes 37 and the channel groove patterns 38 and 39 are provided on both sides of the filtration plate 36. The filtration, membrane 37 and the channel groove patterns 38 and 39 may be provided only on one side of the filtration plate 36.

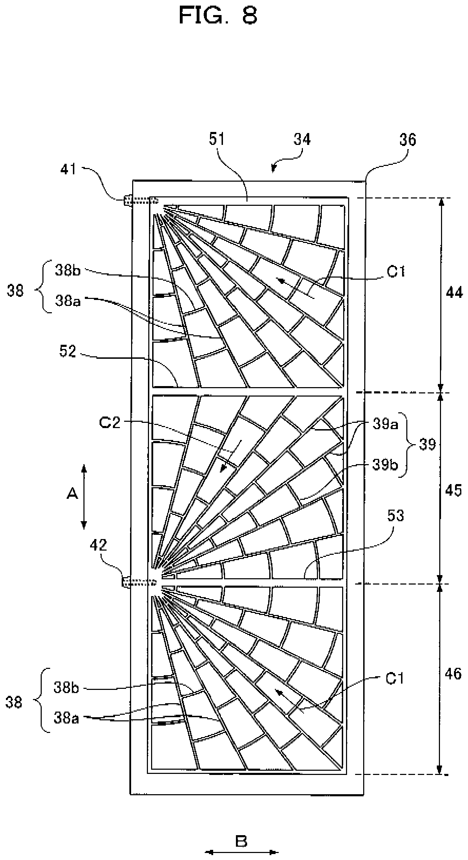

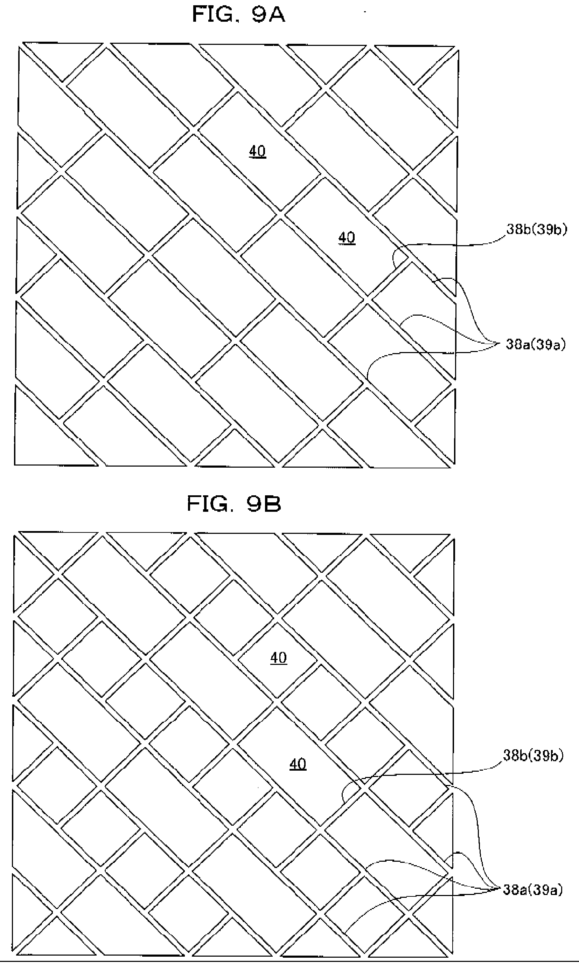

In the foregoing embodiments, as shown in FIGS. 4, 7, and 8, the two adjacent through-channel grooves 38a of the first channel groove pattern 38 communicate with each other through the communication grooves 38b, and the two adjacent through-channel grooves 39a of the second channel groove pattern 39 communicate with each other through the communication grooves 39b. As seventh and eighth embodiments of the present invention, as shown in FIGS. 9A and 9B, at least three adjacent through-channel grooves 38a of a first channel groove pattern 38 may communicate with one another through communication grooves 38b, and at least three adjacent through-channel grooves 39a of a second channel groove pattern 39 may communicate with one another through communication grooves 39b. Further, the communication grooves 38b and 39b are not limited to linear grooves and may be curved or bent.

In the foregoing embodiments, a spacer (e.g., a nonwoven fabric or sponge) may be disposed between the filtration plate 36 and the filtration membrane 37 to prevent the filtration membrane 37 from contacting the filtration plate 36.

In the foregoing embodiments, the membrane cartridges 34 are disposed in the membrane separator 31 such that the long sides of the membrane cartridges 34 are extended in the vertical direction A. The membrane cartridges 34 may be disposed in the membrane separator 31 with the long sides extended in the width direction B.

In the foregoing embodiments, the header grooves 52 and 53 are formed at the boundaries between the channel groove patterns 38 and 39. The header grooves 51 and 53 may be formed only at points corresponding to the permeated liquid outlet nozzles 41 and 42.

In the foregoing embodiments, the channel cross-sectional areas of the header grooves 51 to 53 are larger than those of the through-channel grooves 38a and 39a. Instead of the header grooves 51 to 53, channel grooves may be formed such that the channel cross-sectional areas of the channel grooves are equal to or smaller than those of the through-channel grooves 38a, and 39a.

## Claims

1. A membrane cartridge (34) constituting a submerged membrane separator (31), the membrane cartridge (34) comprising:
a filtration membrane (37) provided at least on one surface of a filtration plate (36);
channel groove patterns (38, 39) formed on the surface of the filtration plate (36) covered with the filtration membrane (37), the channel groove patterns (38, 39) allowing passage of a permeated liquid having passed through the filtration membrane (37); and
permeated liquid outlets (41, 42, 66, 67) provided on a circumferential edge of the filtration plate (36), the permeated liquid outlets (41, 42, 66, 67) collecting and taking out the permeated liquid having passed through the channel groove patterns (38, 39),
wherein the filtration plate (36) is divided into multiple water collection sections (44 - 49),
the channel groove patterns (38, 39) are formed in the respective water collection sections (44 - 49),
the channel groove patterns include a first channel groove pattern (38) and a second channel groove pattern (39),
wherein the first channel groove patterns (38) is formed in one of the collection sections (44 - 49) and the second channel groove pattern (39) is formed in another one of the central water collection sections (44 - 49),
a length direction (C1) of the through channel grooves (38a) in the first channel groove pattern (38) and a length direction (C2) of the through-channel grooves (39a) in the second channel groove pattern (39) are different from each other,
a header groove (51 - 53) is provided at a boundary portion (70) of the water collection sections (44 - 49),
the header groove (51 - 53) has a larger channel cross-sectional area than the through-channel grooves (38a, 39a),
the through-channel grooves (38a, 39a) in one of the water collection sections (44 - 49) and the through-channel grooves (38a - 39a) in another one of the water collection sections (44 - 49) adjacent to the one of the water collection sections communicate with the header groove (51 - 53) through the boundary portion (70),
the respective through-channel grooves (38a, 39a) gradually approach one of the permeated liquid outlets (41, 42, 66, 67) nearest to the water collection section (44 - 49) to which the respective through-channel grooves (38a, 39a) belong from one end to the other end,
**characterized in that**
the header groove (51 - 53) communicates directly with a hole (56) of one of the permeated liquid outlets (41, 42, 66, 67) and
the channel groove patterns (38, 39) including linear through-channel grooves (38a, 39a) across the water collection sections (44 - 49).

2. The membrane cartridge (34) according to claim 1, wherein the through-channel grooves (38a, 39a) in the water collection section (44 - 49) are arranged in parallel.

3. The membrane cartridge (34) according to claim 1, wherein the through-channel grooves (38a, 39a) in the water collection section (44 - 46) are radially arranged with respect to a point close to the nearest permeated liquid outlet (41, 42).

4. The membrane cartridge (34) according to any one of claims 1 to 3, wherein the adjacent through-channel grooves (38a, 39a) communicate with each other through communication grooves (38b, 39b).

5. The membrane cartridge (34) according to claim 4, wherein the communication groove (38b, 39b) and the through-channel groove (38a, 39a) cross each other like a letter T.

6. The membrane cartridge (34) according to any one of claims 1 to 5, wherein the filtration plate (36) has a shape whose length and width are different,
the permeated liquid outlets (41, 42, 66, 67) are disposed at different heights when the filtration plate (36) is installed upright such that a longitudinal direction of the filtration plate (36) is parallel to a vertical direction,
the filtration plate (36) is divided into the water collection sections (44 - 49) in the vertical direction.

7. The membrane cartridge (34) according to any one of claims 1 to 6, wherein the permeated liquid outlets (44 - 49) are provided respectively at positions of boundary portions (70) of the water collection section (44 - 49).

8. The membrane cartridge (34) according to any one of claims 1 to 7, wherein the permeated liquid outlets (41, 42, 66, 67) are provided only on one side edge of the filtration plate (36) or on both side edges of the filtration plate (36).

## Patentansprüche

1. Membranpatrone (34), die eine Tauchmembrantrennvorrichtung (31) darstellt, wobei die Membranpatrone (34) umfasst:
eine Filtrationsmembran (37), die mindestens auf einer Fläche einer Filtrationsplatte (36) vorgesehen ist;
Kanalrillenmuster (38, 39), die auf der Fläche der mit der Filtrationsmembran (37) bedeckten Filtrationsplatte (36) ausgebildet sind, wobei die Kanalrillenmuster (38, 39) den Durchlass einer Permeatlüssigkeit ermöglichen, die die Filtrationsmembran (37) passiert hat; und
Permeatflüssigkeitsauslässe (41, 42, 66, 67), die an einer Umfangskante der Filtrationsplatte (36) vorgesehen sind, wobei die Permeatlüssigkeitsauslässe (41, 42, 66, 67) die Permeatlüssigkeit, die die Kanalrillenmuster (38, 39) passiert hat, sammeln und abführen,
wobei die Filtrationsplatte (36) in mehrere Wassersammelabschnitte (44 - 49) unterteilt ist,
die Kanalrillenmuster (38, 39) in den jeweiligen Wassersammelabschnitten (44 - 49) ausgebildet sind,
die Kanalrillenmuster ein erstes Kanalrillenmuster (38) und ein zweites Kanalrillenmuster (39) enthalten,
wobei
das erste Kanalrillenmuster (38) in einem der Sammelabschnitte (44 - 49) ausgebildet ist und das zweite Kanalrillenmuster (39) in einem anderen der zentralen Wassersammelabschnitte (44 - 49) ausgebildet ist,
eine Längsrichtung (C 1) der Durchgangskanalrillen (38a) im ersten Kanalrillenmuster (38) und eine Längsrichtung (C2) der Durchgangskanalrillen (39a) im zweiten Kanalrillenmuster (39) voneinander verschieden sind,
eine Kopfrille (51 - 53) an einem Grenzbereich (70) der Wassersammelabschnitte (44 - 49) vorgesehen ist, und
die Kopfrille (51 - 53) eine größere Kanalquerschnittsfläche als die Durchgangskanalrillen (38a, 39a) aufweist,
die Durchgangskanalrillen (38a, 39a) in einem der Wassersammelabschnitte (44 - 49) und die Durchgangskanalrillen (38a - 39a) in einem anderen, an den einen der Wassersammelabschnitte (44 - 49) angrenzenden Wassersammelabschnitt über den Grenzbereich (70) mit der Kopfrille (51 - 53) kommunizieren,
die jeweiligen Durchgangskanalrillen (38a, 39a) sich allmählich einem der Permeatflüssigkeitsauslässe (41, 42, 66, 67) nähern, der dem Wassersammelabschnitt (44 - 49) am nächsten ist, zu dem die jeweiligen Durchgangskanalrillen (38a, 39a) von einem Ende zum anderen Ende gehören,
**dadurch gekennzeichnet, dass**
die Kopfrille (51 - 53) direkt mit einem Loch (56) eines der Permeatflüssigkeitsauslässe (41, 42, 66, 67) kommuniziert und
die Kanalrillenmuster (38, 39) lineare Durchgangskanalrillen (38a, 39a) quer zu den Wassersammelabschnitten (44 - 49) aufweisen.

2. Membranpatrone (34) gemäß Anspruch 1, wobei die Durchgangskanalrillen (38a, 39a) im Wassersammelabschnitt (44 - 49) parallel angeordnet sind.

3. Membranpatrone (34) gemäß Anspruch 1, wobei die Durchgangskanalrillen (38a, 39a) im Wassersammelabschnitt (44 - 46) in Bezug auf einen Punkt nahe dem nächstgelegenen Permeatflüssigkeitsauslass (41, 42) radial angeordnet sind.

4. Membranpatrone (34) gemäß einem der Ansprüche 1 bis 3, wobei die angrenzenden Durchgangskanalrillen (38a, 39a) über Kommunikationsrillen (38b, 39b) miteinander kommunizieren.

5. Membranpatrone (34) gemäß Anspruch 4, wobei sich die Kommunikationsrille (38b, 39b) und die Durchgangskanalrille (38a, 39a) wie ein Buchstabe T kreuzen.

6. Membranpatrone (34) gemäß einem der Ansprüche 1 bis 5, wobei die Filtrationsplatte (36) eine Form aufweist, deren Länge und Breite verschieden sind,
die Permeatlüssigkeitsauslässe (41, 42, 66, 67) in verschiedenen Höhen angeordnet sind, wenn die Filtrationsplatte (36) aufrecht installiert ist, sodass eine Längsrichtung der Filtrationsplatte (36) parallel zu einer vertikalen Richtung ist,
die Filtrationsplatte (36) in mehrere Wassersammelabschnitte (44 - 49) in vertikaler Richtung unterteilt ist.

7. Membranpatrone (34) gemäß einem der Ansprüche 1 bis 6, wobei die Permeatflüssigkeitsauslässe (44 - 49) jeweils an Positionen von Grenzbereichen (70) des Wassersammelabschnitts (44 - 49) vorgesehen sind.

8. Membranpatrone (34) gemäß einem der Ansprüche 1 bis 7, wobei die Permeatflüssigkeitsauslässe (41, 42, 66, 67) nur an einer Seitenkante der Filtrationsplatte (36) oder an beiden Seitenkanten der Filtrationsplatte (36) vorgesehen sind.

## Revendications

1. Cartouche membranaire (34) constituant un séparateur à membrane immergé (31), la cartouche membranaire (34) comprenant :
une membrane de filtration (37) disposée au moins sur une surface d'une plaque de filtration (36) ;
des motifs de rainure de canal (38, 39) formés sur la surface de la plaque de filtration (36) recouverte de la membrane de filtration (37), les motifs de rainure de canal (38, 39) permettant le passage d'un liquide perméat passé à travers la membrane de filtration (37) ; et
des sorties de liquide perméat (41, 42, 66, 67) disposées sur un bord circonférentiel de la plaque de filtration (36), les sorties de liquide perméat (41, 42, 66, 67) collectant et évacuant le liquide perméat passé à travers les motifs de rainure de canal (38, 39),
la plaque de filtration (36) étant divisée en de multiples sections de collecte d'eau (44 - 49),
les motifs de rainure de canal (38, 39) étant formés dans les sections de collecte d'eau (44 - 49) respectives,
les motifs de rainure de canal comprenant un premier motif de rainure de canal (38) et un second motif de rainure de canal (39),
le premier motif de rainure de canal (38) étant formé dans une des sections de collecte (44 - 49) et le second motif de rainure de canal (39) étant formé dans une autre des sections de collecte d'eau (44 -49) centrales,
une direction de longueur (C1) des rainures de canal traversant (38a) dans le premier motif de rainure de canal (38) et une direction de longueur (C2) des rainures de canal traversant (39a) dans le second motif de rainures de canal traversant (39) étant différentes l'une de l'autre,
une rainure de collecteur (51 - 53) étant disposée au niveau d'une partie limite (70) des sections de collecte d'eau (44 - 49),
la rainure de collecteur (51 - 53) ayant une zone transversale de canal plus grande que les rainures de canal traversant (38a, 39a),
les rainures de canal traversant (38a, 39a) dans une des sections de collecte d'eau (44 - 49) et les rainures de canal traversant (38a - 39a) dans une autre des sections de collecte d'eau (44 - 49) adjacente à l'une des sections de collecte d'eau communiquant avec la rainure de collecteur (51 - 53) à travers la partie limite (70),
les rainures de canal traversant (38a, 39a) respectives s'approchant progressivement d'une des sorties de liquide perméat (41, 42, 66, 67) les plus proches de la section de collecte d'eau (44 - 49) à laquelle les rainures de canal traversant (38a, 39a) respectives appartiennent d'une extrémité à l'autre,
**caractérisée en ce que**
la rainure de collecteur (51 - 53) communique directement avec un trou (56) d'une des sorties de liquide perméat (41, 42, 66, 67) et
les motifs de rainure de canal (38, 39) comprenant des rainures de canal traversant linéaires (38a, 39a) à travers les sections de collecte d'eau (44 - 49).

2. Cartouche membranaire (34) selon la revendication 1, les rainures de canal traversant (38a, 39a) dans la section de collecte d'eau (44 - 49) étant disposées en parallèle.

3. Cartouche membranaire (34) selon la revendication 1, les rainures de canal traversant (38a, 39a) dans la section de collecte d'eau (44 - 46) étant disposées radialement par rapport à un point proche de la sortie de liquide perméat (41, 42) la plus proche.

4. Cartouche membranaire (34) selon l'une quelconque des revendications 1 à 3, les rainures de canal traversant (38a, 39a) adjacentes communiquant entre elles à travers des rainures de communication (38b, 39b).

5. Cartouche membranaire (34) selon la revendication 4, la rainure de communication (38b, 39b) et la rainure de canal traversant (38a, 39a) se croisant comme la lettre T.

6. Cartouche membranaire (34) selon l'une quelconque des revendications 1 à 5, la plaque de filtration (36) ayant une forme dont la longueur et la largeur sont différentes,
les sorties de liquide perméat (41, 42, 66, 67) étant disposées à des hauteurs différentes lorsque la plaque de filtration (36) est installée verticalement, de sorte qu'une direction longitudinale de la plaque de filtration (36) soit parallèle à une direction verticale,
la plaque de filtration (36) étant divisée en sections de collecte d'eau (44 - 49) dans le sens vertical.

7. Cartouche membranaire (34) selon l'une quelconque des revendications 1 à 6, les sorties de liquide perméat (44 - 49) étant disposées respectivement aux positions des parties limites (70) de la section de collecte d'eau (44 - 49) .

8. Cartouche membranaire (34) selon l'une quelconque des revendications 1 à 7, les sorties de liquide perméat (41, 42, 66, 67) étant disposées uniquement sur un bord latéral de la plaque de filtration (36) ou sur les deux bords latéraux de la plaque de filtration (36).
